# EUROPEAN PATENT SPECIFICATION

(11) **EP 4 148 194 B1**
(45) Date of publication and mention of the grant of the patent: **29.10.2025**
(21) Application number: 22194391.3
(22) Date of filing: 07.09.2022
(51) Int. Cl.: E03B 3/03, E03F 1/00

(54) **FOLDABLE RAINWATER BOX**
FALTBARER REGENWASSERKASTEN
BOÎTE À EAU DE PLUIE PLIABLE

(30) Priority: 10.09.2021 NL 2029173; 14.04.2022 NL 2031575
(43) Date of publication of application: 15.03.2023
(73) Proprietor: Pipelife Nederland B.V., 1601 MA Enkhuizen (NL)
(72) Inventor: Schäfer, Matthias, 96465 Neustadt bei Coburg (DE); Lechner, Michael, 96269 Großheirath (DE); Hoekstra, Hielke Dolf, 8925 HM Leeuwarden (NL); Schouten, Michael Adrianus Jacobus, 1689 WT Zwaag (NL); Bohle, Ulrich, 50226 Frechen (DE)
(74) Representative: Nederlandsch Octrooibureau

(56) References cited:
- US-A- 5 564 599
- US-B1- 8 146 771

## Description

### FIELD OF THE INVENTION

The invention relates to a foldable rainwater box. The invention further relates to a method of manufacturing a foldable rainwater box.

### BACKGROUND OF THE INVENTION

Liquid receiving, storage and draining structures, also known as a storm box, drainage box or rainwater box, can be used for various purposes. Often, these structures are placed underground for temporarily storing and draining large amounts of water. The structure provides the possibility to collect and store large amounts of water, such as which may occur as a result of heavy rain fall and the like.

The storage capacity thus obtained provides a temporary relief for the surface and underground, in such a way that flooding and erosion can be prevented or at least mitigated. The water collected in the structure may subsequently be released in a controlled manner, whereby a buffer function is obtained. The release may be carried out in several ways, such as discharge through a sewer, by means of infiltration into the underground etc.

Conventionally, such boxes may simply be stacked one on top of each other and next to each other. This has a disadvantage that little to no overall volume decrease is achieved. Thus, storing and transporting the boxes can be expensive. Further, the stacked boxes by virtue of their relatively large total volume may be complex to handle. Thus, transport and storage costs may also be large.

U.S. Pat. No. 5,564,599 shows a foldable shipping container capable of being shipped in either a folded or erected condition. The container includes an outer container and an inner tank. The outer container is foldable upon itself so that all portions of the outer container are generally confined within the perimeter of the its base by folding the sides inward in half along a vertical line and stacking the front and rear wall one either side of the folded side, with the base and top wall on the outer sides. The inner tank is also provided with a protected valve assembly located within the perimeter of the base and further includes an inflatable support which assists in the filling the inner tank. US8146771 B1 discloses a foldable box.

It would therefore be desirable to provide an improved structure for receiving and storing water that alleviated some or all of the above problems.

### SUMMARY OF THE INVENTION

In one aspect, the present application provides a foldable rainwater box for liquid storage comprising a first side and second side forming opposing sides of the box in a use state, and a first end and a second end forming opposing ends of the box in the use state, wherein adjacent sides and ends are rotatably connected by one or more hinges such that the sides and ends can rotate from a folded state to the use state. Such rotatable connections allows for the box to be much more compact for transportation and storage, and easily rotate to a use state, typically forming a rectangular or square box with the panels being substantially perpendicular to each other. This provides an easy and quick way to assemble the boxes on-site without extra parts, simply rotating the panels from the folded state to the use state.

The folded state rotates the sides and ends with respect to each other such that the first side and the first end lay in a first plane and the second side and the second end lay in a second plane, the first plane and the second plane being parallel. Optionally, the first side and the first end (in the first plane) lay directly beneath (or above) the second side and the second end (in the second plane), making a compact rectangular package for storage and/or transport. This folded state also allows for stacking further folded boxes on top without worry about damage to the boxes.

According to an embodiment, each of the sides and ends comprise an upper frame and a lower frame connected by one or more pillars; and the sides and ends are connected at hinges on the upper frame and lower frames. Such a configuration can provide a strong, yet light-weight option for building an assembly of boxes together.

Optionally, the one or more pillars can be formed of one or more columns extending between the upper frame and the lower frame, for example, two groups of 2-4 columns. Further optionally, columns can be circular or oval shaped, and adjacent columns could be connected by a planar extension or other connection. Such pillars and/or groups of columns can provide strength for the box and overall assembly in the vertical direction, resisting buckling forces.

According to an embodiment, the upper frame comprises one or more cavities on an upper surface and the lower frame comprises one or more feet on a lower surface. The cavities and feet are configured to engage each other such that a foot from an upper box can engage a cavity of a box beneath it. Optionally, the cavities can be located directly above a pillar or column, with a foot located directly below a foot or column. Such a configuration can provide additional strength by locating the engaged connections between boxes to align with the pillars and/or columns providing strength and support.

According to the invention, the foldable rainwater box comprises a plurality of hinges connecting adjacent sides and ends. Each corner has one or more hinges connecting the adjacent sides/ends, for rotating between the folded state and the use state. The plurality of hinges comprises a first pair of hinges on opposing corners in the use state and a second pair of hinges on opposing corners in the use state, wherein the first pair of hinges permits different rotational movement than the second pair of hinges. Optionally, the first pair of hinges can connect the first side panel and first end panel, and the second side panel and second end panel; and permit rotation between 90 degrees (in the use state) and 180 degrees (in the folded state with the side/end panels laying in a plane). Further optionally, the second pair of hinges can connect the first end and the second side, and the second end and first side, and permit rotation between 90 degrees (in the use state) and 0 degrees (in the folded state when the respective sides/ends are stacked upon each other).

In some embodiments, the hinges are not placed directly in the corners. This can help to facilitate the proper folding configurations (e.g., placing a hinge not directly in the corner can allow adjacent panels to lay on each other without space between). Such a configuration can also help to ensure that the corners remain very high strength, for example, for stacking with other boxes. The hinges in such embodiments could be placed at an inside of a corner, at an outside of a corner, or next to a corner in different embodiments.

According to an embodiment, each side and/or end may comprise one or more locking mechanisms to restrict foldability of the sides/ends when in a use state. Optionally, these could be one or more of a protrusion, a lip, an extension of a hinge, and complementary interlocking parts. Further optionally, this could be a lip protrusion at each end extending in the direction of the ends in the use state such that the lip protrusion restricts foldability of the sides. Such locking mechanisms can ensure that the box remains in the intended state and is stable for either use or storage/transport.

According to another embodiment, each side and end may comprise at least one side connection element. Optionally, the at least one side connection element comprises a protruding portion and a receiving portion. Further optionally, the protruding portion and receiving portion are complementary in shape. This can allow for boxes to easily connect side by side in a use state.

According to another embodiment, each side and end comprises a panel. This can be either integrally formed with the side or end, or connected to the side or end. The panel can help to keep dirt and/or other elements out of the box and/or water storage assembly when in use.

Another aspect of the invention provides a method of manufacturing a foldable rainwater box, the method comprising forming a side with at least a first portion of a rotatable hinge on a first side and at least a second portion of the rotatable hinge on a second side opposite to the first side. The first portion is shaped complementary to a second portion of the hinge. By manufacturing the side of a foldable rainwater box in such a way, that it can connect to other sides and be able to fold into a folded state, the foldable rainwater box can more easily be transported from the store to the location of the foldable rainwater box to be supported. The method could equally be applied to forming an end of the foldable rainwater box.

According to an embodiment, the step of forming the side comprises forming a side with an upper frame, a lower frame and at least one pillar extending between the upper frame and the lower frame, wherein each of the upper frame and lower frame has the first portion of the rotatable hinge on a first side and the second portion of the rotatable hinge on the second side. Optionally, this can be through moulding or any other suitable method..

According to an embodiment, the steps of forming a first and second portion of a hinge and forming at least one connection element are performed simultaneously. In this way, an efficient manufacturing process is achieved.

According to an embodiment, the method comprises connecting sides and ends as previously described into a box shape, with first portions of the hinge on one side connecting to second portions of the hinge on an adjacent side such that the box can rotate between a use state forming the box shape and a folded state. Such a method could be performed at a manufacturing location, thereby only having to rotate open to a use state to use and assembly the boxes on location.

### BRIEF DESCRIPTION OF THE DRAWINGS

The invention will be described further with respect to embodiments shown in the drawings.
FIG 1 shows a perspective view of a foldable rainwater box in a use state in accordance with one aspect of the present disclosure,
FIG 2 shows a perspective view of a foldable rainwater box in a folded state in accordance with one aspect of the present disclosure,
FIG 3 shows a perspective view of a foldable rainwater box in an intermediate state between the use state and an folded state in accordance with one aspect of the present disclosure,
FIG 4 shows a perspective view of a panel for a foldable rainwater box,
FIG 5 shows a perspective view of a hinge,
FIG. 6A shows a perspective view of a second embodiment of a foldable rainwater box.
FIG. 6B shows a side view of the box of Figure 6A.
FIG. 6C shows a top view of the box of Figure 6A.
FIG. 6D shows a view of the box of Figure 6A in a folded state.
FIG 6E shows a perspective view of the box of FIG. 6A, with a wall attached.
FIG 7 shows a perspective view of a system comprising a plurality of foldable rainwater boxes in an use state.

### DESCRIPTION

The following is a description of certain embodiments of the invention, given by way of example only and with reference to the figures. It is also to be understood that the terminology used herein is for the purpose of describing particular aspects only and is not intended to be limiting.

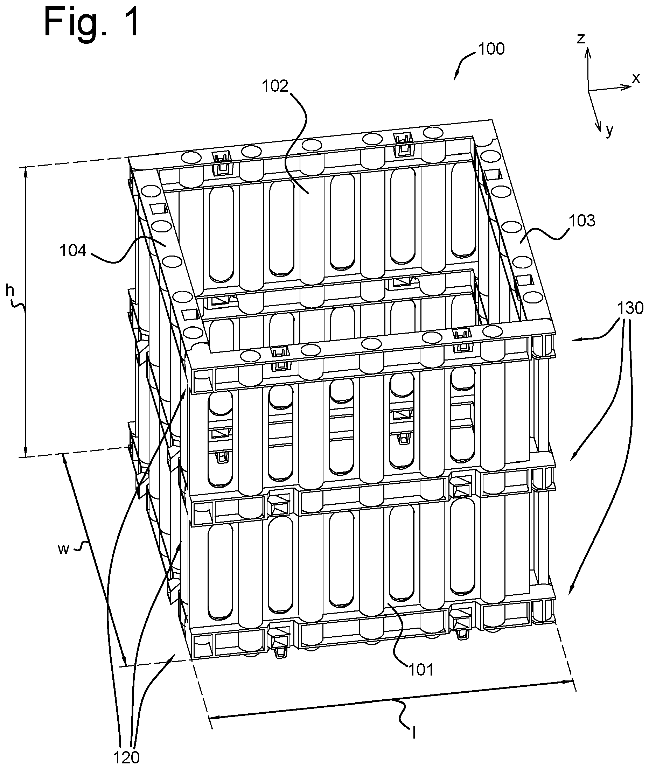

FIG 1 shows a perspective view of a foldable rainwater box 100 in a use (unfolded) state in accordance with one aspect of the present disclosure. The foldable rainwater box 100 comprises a first side panel 101, a second side panel 102, a first end panel 103 and a second end panel 104, each panel substantially perpendicular to adjacent panels. The first side panel 101 and the second side panel 102 form opposing sides of the foldable rainwater box 10 in the use state, and the first end panel 103 and the second end panel 104 form opposing ends of the foldable rainwater box 100 in the use state. Each panel is rotatably connected to its adjacent panels. For example, the first side panel 101 is rotatably connected to the first end panel 103 and the second end panel 104. This connection can be through one or more rotatable hinges at each respective connection.

According to one aspect of the invention, each of the panels is made up of one or more materials. The material can be a polymer material, a wood material, a metal material or any other material, or combination of materials. A polymer material is relatively easy to use and produce into complex shapes, such as the panel with hinges. Examples of polymer materials include Polypropylene (PP), Polyvinyl Chloride (PVC) and Polyethylene (PE), among others. The foldable rainwater box 100 is typically made from a polymer material, preferable Polypropylene (PP) or Polyvinyl Chloride (PVC). A wood material is relatively strong in tension and resistant to compression. Examples of wood materials include lumber and timber, among others. Some metal materials have a relatively high structural strength, making them useful materials for resisting large loads, such as when staking a plurality of foldable rainwater boxes. Examples of metal materials include iron and steel, among others.

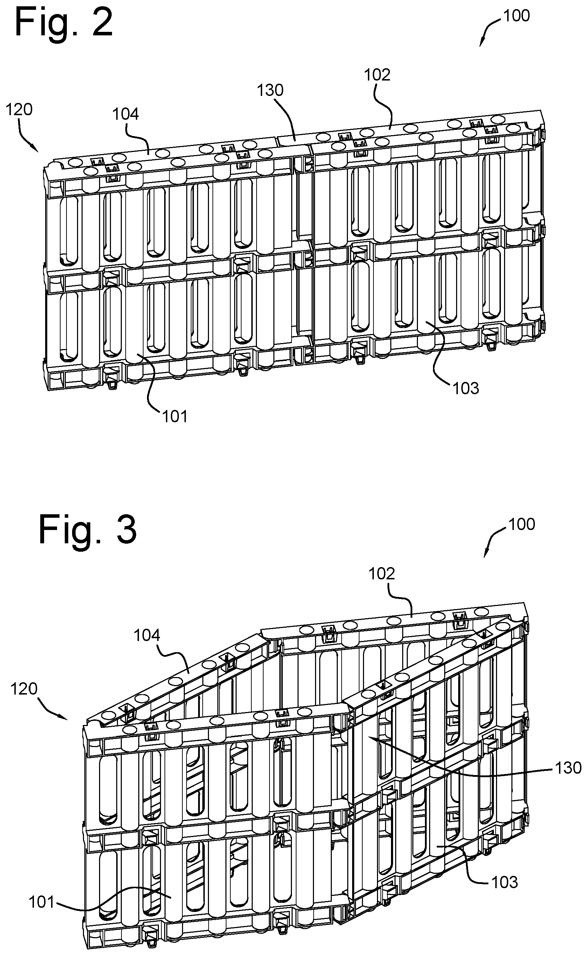

To move from the use state shown in FIG 1 to the folded state shown in FIG 2, two adjacent panels can be inwardly rotated. An intermediate state between the use state and an folded state of the foldable rainwater box 100 is shown in FIG 3. In the fold state, the first side panel 101 and the first end panel 103 lay in a first plane and the second side panel 102 and the second end panel 104 lay in a second plane, the first plane and the second plane are parallel. As can be seen, the first side panel 101 and first end panel 103 lay directly beneath the second side panel 102 and second end panel 104. In some embodiments, they may be slightly shifted to allow for full connections between the two, thereby making for a very compact and strong package for storage and/or transport. In some embodiments, there could be some space between all of parts of panels, e.g., by the hinges, in the folded state.

A foldable rainwater box 100 may be folded before use by folding the side and end panels in the way shown in FIG 2 to be transportable to the location of their use in a space saving and cost effective way. The panels and/or rotatable hinges can have various features and/or mechanisms for guiding and/or limiting rotation between the use state and folded state.

Optionally, the foldable rainwater box 100 includes a click flap (not included in the figures). To enable securing the foldable rainwater box in the use state, at leach one panel includes a clicking mechanism. The clicking mechanism includes a click flap on a panel which engages with an adjacent panel. By having a clicking mechanism, once the foldable rainwater box is in the use state it might be difficult to be fold to the folded state. Thereby, the foldable rainwater box is securely fixed in the use state.

The foldable rainwater box 100 has a longitudinal direction X, a width direction Y and a height direction Z. In the longitudinal direction X, the foldable rainwater box 100 comprises two side panels 101,102 to cover the longitudinal sides. In the width direction Y, the foldable rainwater box 100 is provided with two end panels 103,104 to cover the transverse side. Directions X, Y and Z are shown in each figure to assist in the explanation of the relative arrangement of features of the foldable rainwater box 100.

Each panel 101,102,103,104 defines a thickness (t), a length (l) and height (h). The height of each panel 101,102,103,104 is measured in the height direction Z. The length (l) and thickness (t) of each side panel 101,102 are measured in the longitudinal direction X and the width direction Y, respectively. The length (l) and thickness (t) of each end panel 103,104 are measured in the width direction Y and the longitudinal direction X, respectively. Preferable, the thickness (t) of a panel is 5cm or less. More preferable, the thickness (t) is 4cm or less. When it comes to using a thickness of more than 5cm, transporting foldable rainwater boxes in a folded state supposes a considerable volume. Alternatively, the thickness (t) of a panel can be more than 5cm. In such a case, a foldable rainwater box provides sufficient support for carrying more load. For example, a relatively high number of foldable rainwater boxes can be vertically staked, when the thickness of a panel is more than 5cm. Optionally, each of the panels has the same thickness (t). Alternatively, the side panels can have a different thickness (t) than the end panels. Preferable, the length (l) of a panel can be 30cm or more. Alternatively, the length (l) of a panel can be less than 30cm. Optionally, each of the panels have the same length (I). Alternatively, the side panels can have a different length (l) than the end panels. Preferable, each of the panels have the same height (h). By having panels of same height, a plurality of foldable rainwater boxes can be connected side-by-side and also pile up on top of each other.

According to one aspect of the invention, the first side panel 101 can be equal in thickness, length and height to the second side panel 102, and the first end panel 103 can be equal in thickness, length and height to the second end panel 104. Thus, the first side panel 101 and the second side panel 102 can be viewed as a pair of side panels, and the first end panel 103 and the second end panel 104 can be viewed as a pair of end panels. Thereby, defining a foldable rainwater box having a rectangular cross-sectional shape in the use (unfolded) state. Optionally, all panels 101,102,103,104 can be equal in thickness, length and height. Thereby, defining a foldable rainwater box having a square cross-sectional shape in the use state.

Two adjacent panels may define a corner of the foldable rainwater box 100 in the use state. For example, the first side panel 101 and the first end panel 103 are substantially perpendicular and define a first corner 111 of the foldable rainwater box 100 in the use state, the first end panel 103 and the second side panel 102 are substantially perpendicular and define a second corner 112 of the foldable rainwater box 100 in the use state, the second side panel 102 and the second end panel 104 are substantially perpendicular and define a third corner 113 of the foldable rainwater box 100 in the use state, and the second end panel 104 and the first side panel 101 are substantially perpendicular and define a fourth corner 114 of the foldable rainwater box 100 in the use state. The first corner 111 and the third corner 113 being opposing corners, and the second corner 112 and the fourth corner 114 being also opposing corners of the foldable rainwater box 100 in the use state.

Optionally, the foldable rainwater box 100 may include a base panel and/or a top panel.

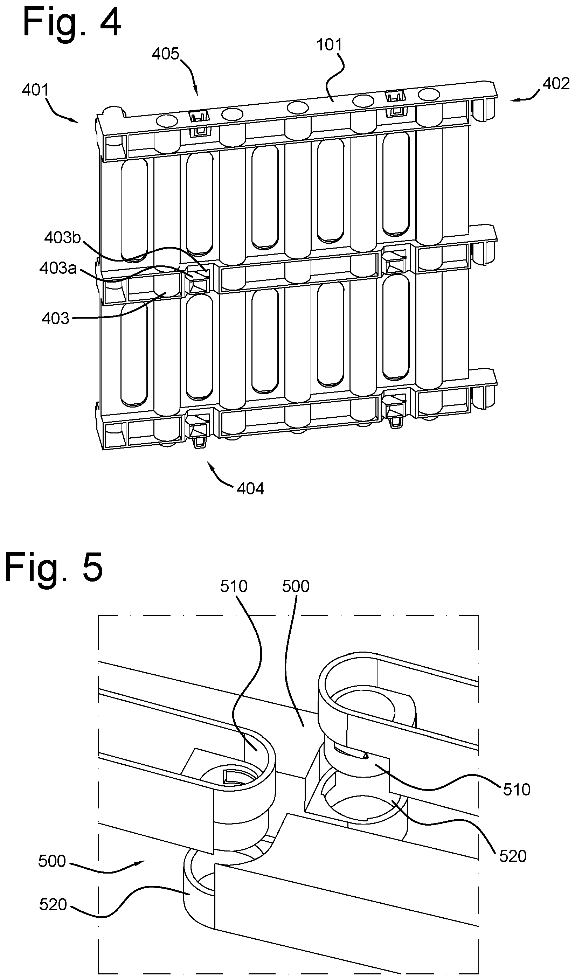

As shown in FIG. 1, the foldable rainwater box 100 comprises a plurality of hinges 120,130 connecting adjacent panels. By connecting two adjacent panels with one or more hinges, two adjacent panels can rotate around an axis of rotation defined by the hinges connecting the two adjacent panels. Each hinge comprises at least two hinge parts 401,402, as shown in FIG 4. The hinge parts could be formed as part of the panels, or could be formed separately and connected to the respective panels to join adjacent panels in a rotatable manner.

The plurality of hinges can include a first pair of hinges 120 on opposing corners of the foldable rainwater box 100 in the use state and a second pair of hinges 130 on opposing corners of the foldable rainwater box 100 in the use state. For example, the first pair of hinges 120 can be arranged on the first corner 111 and the third corner 113 of the foldable rainwater box 100, and the second pair of hinges 130 can be arranged on the second corner 112 and the fourth corner 114 of the foldable rainwater box 100. Alternatively, the first pair of hinges 120 can be arranged on the second corner 112 and the fourth corner 114 of the foldable rainwater box 100 in the use state, and a second pair of hinges 1130 can be arranged on the first corner 111 and the third corner 113 of the foldable rainwater box 100 in the use state.

According to an aspect of the invention, the first pair of hinges 120 permits a different rotational movement than the second pair of hinges 130. By allowing different rotational movements, the respective panels can rotate different amounts such that the box is foldable, as shown in FIGs 2 and 3. For example, the first pair of hinges permit a movement between 0 and 90 degrees, and the second pair of hinges permit a movement between 90 and 180 degrees. Alternatively, the first pair of hinges and the second pair of hinges permit a movement between 0 and 180 degrees. By including one or more features on the panels and/or hinges to guide the correct rotational movements, the box is easier to move from a use state to a folded state and vice versa. Such panel features could be one or more of a protrusion, an extension of a hinge, a stopper, and complementary interlocking parts.

According to an aspect of the invention, when the foldable rainwater box is in the folded state, at least a part of a side panel folds on top of at least a part of an end panel minimizing any space in between. Thereby, allowing a large amount of foldable rainwater boxes to be transported, and reducing transportation costs.

While the boxes shown and described have four sides with substantially perpendicular panels in a use state, the skilled person would understand that the boxes could vary and have more or fewer sides, for example, 3 to 8 sides. In such cases, the panels would have different angles in the use state and/or may fold differently.

According to another aspect of the invention, at least one connection element 403 is provided, to connect a first panel (e.g. a first side panel 101 of a first foldable rainwater box) with a second panel (e.g. a second side panel 102 of a second foldable rainwater box), as shown in FIG 4. The connection element comprises a protruding portion 403a and a receiving portion 403b. The receiving portion 403b of the first panel receives a protrusion portion 403a of the second panel, and vice versa. The receiving portion 403b and the protruding portion 403a are complementary in shape, i.e. for connecting a first and a second panel, the protruding portion of the first panel fits into the receiving portion of the second panel, and vice versa. Additional separate connecting elements will then be superfluous and connecting a plurality of panels to each other will be simplified. Preferably, each panel comprises at least two connection elements.

The at least one connection element 403 may be self-locking when secured to another connection element. The self-locking or self-centring property would be advantageous while connecting the panels. At the moment that the connection elements are starting to engage each other, there would be only one way of movement left, i.e. towards a fixation position wherein the panels are fully connected.

In an embodiment, the protruding portion 403a has an outward protruding shape and the receiving portion 403b has an inward extending shape, forming a recess in the side portion, wherein the shapes of the outward protrusion and the recess are similar. The shape of the recess and the protrusion may be any shape suitable shape. Preferably, the protruding portion and the receiving portion are at least partially trapezoidal in shape.

The protruding portion and the receiving portion may be adjacent to each other, i.e. the protruding portion and the receiving portion may share a mutual edge.

The panels could also include one or more other features, e.g., protrusions 404 and recesses 405, for connecting vertically to other boxes and/or a top or bottom panel, as shown in FIG 4.

FIG 5 shows a perspective view of an exemplary hinge. It should be understand that the hinge of FIG 5 is merely presented as an example. The hinge 200 comprises a first hinge part 510 and a second hinge part 520. The first hinge part 510 is located in a first panel, for example, the first side panel 101, and the second hinge part 520 is located in a second panel adjacent to the first panel, for example, the first end panel 103. The first hinge part 510 and the second hinge part 520 are complementary in shape, i.e. for connecting the first panel and the second panel, the first hinge part 510 of the first panel fits into the second hinge part 520 of the second panel such that it can allow the panels to rotate with respect to each other around an axis running through the hinge parts. Various types of hinges could be used, and could include features which guide and/or limit rotation. For example, the hinge can ensure that certain panels rotate from the use state (substantially 90 degrees) to a folded state where they are in line with each other; or from the use state to a folded state where they fold on top of each other. Various hinge features can help facilitate this, including but not limited to guide channels and rails, stops, protrusions and complementary recesses, ramps, extensions and shape.

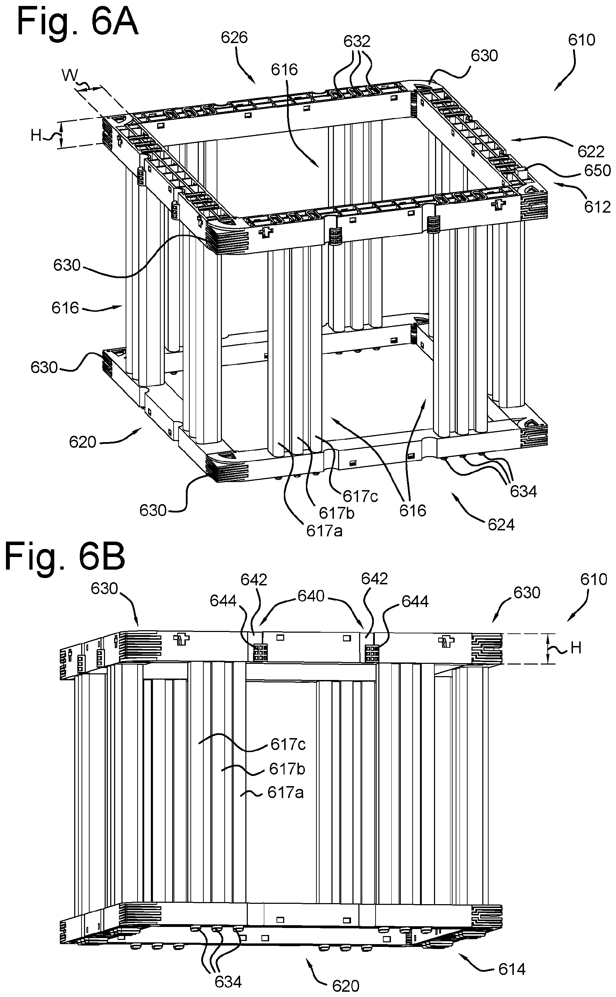

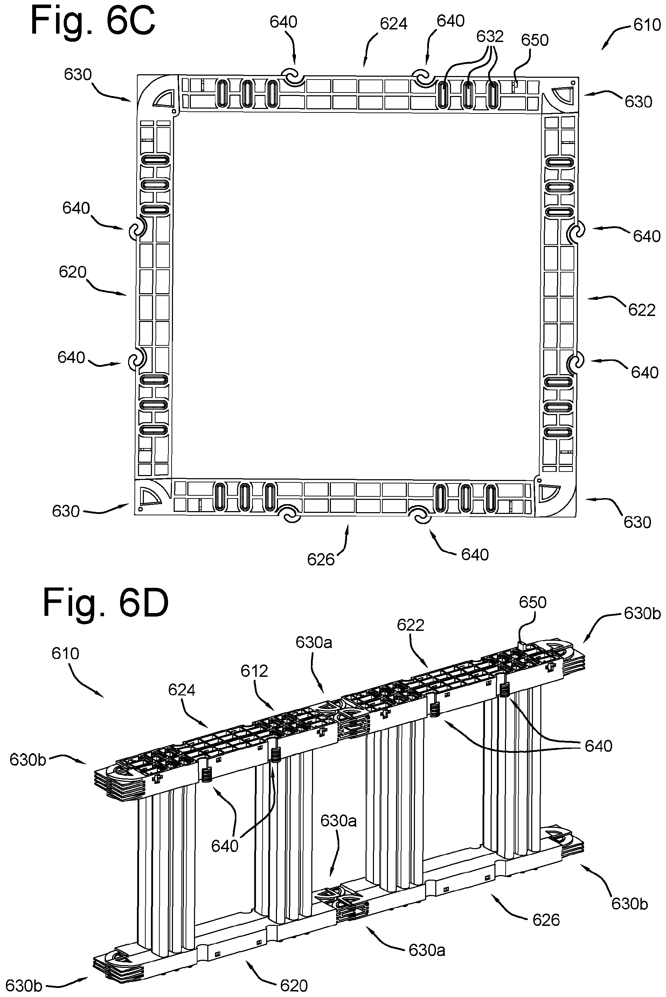

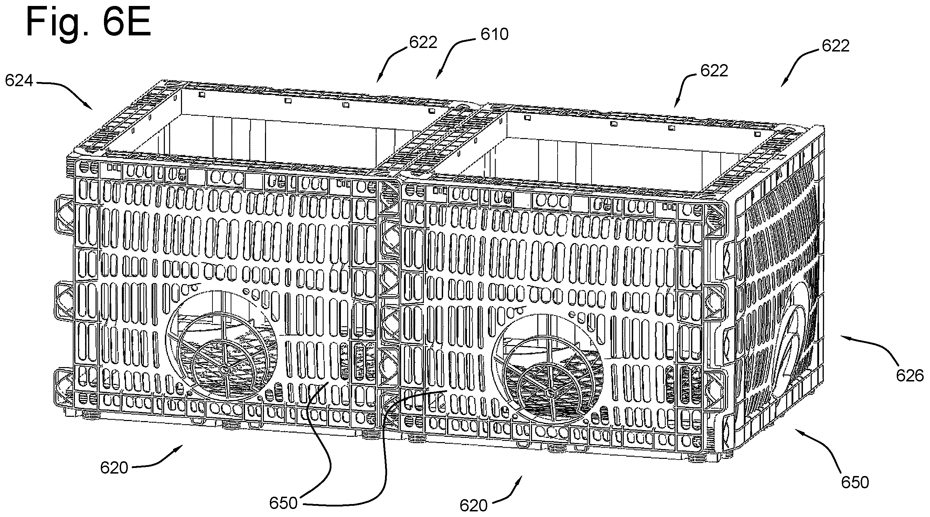

Figure 6A shows a perspective view of a second embodiment of a drainage box 610, Figure 6B shows a side view of box 610, Figure 6C shows a top view of box 610, and Figure 6D shows box 610 in a folded state, and Figure 6E shows two boxes 610 connected side by side and with panels attached on outer sides and end.

Box 610 includes upper frame 612, lower frame 614 and pillars 616, which form first side 620, second side 622, first end 624, second end 626. First side 620 connects to first end 624 and second end 626 at hinges 630 on each of upper frame 612 and lower frame 614. Second side 622 also connects to each of first end 624 and second end 626 at hinges 630 on upper frame 612 and lower frame 616. In Figure 6E, panels 650 connect to first sides 620 and one second end 626 of boxes 610.

Pillars 616 extend between upper frame 612 and lower frame 614 on each of first and second sides 620, 622 and first and second ends 624, 626. Pillars 616 are shown as three oval shaped columns 617a, 617b, 617c connected to each other, though could have a different configuration, for example a different shape (e.g., cylindrical, prism) and/or number of columns. The connections are typically a planar extension between the columns, which help to increase the strength and prevent buckling. Upper frame 612, on its upper surface, includes a cavity 632 aligned with the top of each column 617a, 617b, 617c. A foot 634 extends from the lower surface of lower frame 614 aligned with the bottom of each column 617a, 617b, 617c. The foot 634 is configured to fit into the cavity 632 such that boxes 610 can stack on top of one another with feet 634 of the upper box fitting into cavities 632 of the lower box. Feet 634 and/or cavities 632 can include locking features such that the feet 634 require a large amount of force to be removed from cavities, or even that feet 634 cannot be pulled out of the cavities 632 once inserted. Such a locking mechanism could be related to the sizing and/or include other features such as a flange, ridge, shoulder, projection(s), etc.

Hinges 630 connecting sides 620, 622 and ends 624, 626 are rotatable hinges to rotate the box from a flat or collapsed configuration (see Figure 6D) in the same manner as shown and described in relation to FIGS. 1-5 for storage or transport to the use position shown in Figures 6A-6C. In some embodiments, hinges 630a can have a different configuration than hinges 630b to allow for and guide the correct rotations between the use state and folded state (e.g., rotation from 180 degrees to 90 degrees for hinges 630a and rotation from stacked on each other or zero degrees to 90 degrees for hinges 630b). In some embodiments hinges could lock once opened such that the box 610 could not be collapsed again. Flat plate hinges 630 are shown in which alternating stacked plates form the hinge and rotate with respect to each other. Such hinges can provide a very strong and sturdy connection between sides and ends, though other types of hinges could also be used with the box shown.

The sides/ends and/or entire box 610 can be formed of a plastic material, or another material which has sufficient strength. For example, each side and end of box 610 could be formed as one integral piece through injection moulding or another suitable production method. Then each side 620, 622 and end 624, 626 could be connected at hinges 630 to form box 610.

Upper frame 612 also includes connection elements 640 on the outer side of each of first and second sides 620, 622 and first and second ends 624, 626. In the embodiment shown, each of first and second sides 620, 622 and first and second ends 624, 626 include two connection elements 640, though this could vary and include more or less in other embodiments. Typically, each side or end would include at least one connection element 40.

Each connection element 640 includes a receiving portion 642 and a protruding portion 644. The receiving portion is curved, arcuate or semicircular, extending into the width W of the upper frame 12 through the height H of the upper frame. The protruding portion 644 is offset from the top of the upper frame 612, extending only a portion of the height of the upper frame, for example, 30-70%. The protruding portion 644 is curved, arcuate or semi-circular shaped, and is complementary to the receiving portion such that a protruding portion 644 can fit within a receiving portion 642, thereby connecting two boxes 610 side by side in either a use state or a folded state. The connection elements 640 are typically integrally formed with the sides/ends of the upper frame 612, though could be formed separately and connected.

Each connection element 640 is identical. Due to complementary paired receiving portion 642 and protruding portion 644, each connection element 640 can freely mate with any other identical connection element 640 without regard for gender, alignment, orientation, etc.

Box 610 works much the same way as described for box 100, rotating from a flat, folded state for storage or transport (FIG. 6D) to a rectangular or cube configuration for use (FIGS. 6A-6C).

In some embodiments, the boxes can also be stacked in the folded state, with the feet 634 of the upper box fitting into cavities 632 of the lower box. In some embodiments, the box can have a pin 650 or other feature which extends upward from the top of the box, and is located such that it prevents full insertion of feet 634 into cavities 632 when the box 610 is in a folded state. Then when rotated to an open, use state the pin aligns with an opening in the upper box such that the feet 634 can fully engage cavities 632 and boxes connect vertically. Such a feature can be especially useful when feet 634 lock into cavities 632, with the pin preventing such locking while boxes are in a folded state until they are rotated into their use state for assembly.

In an embodiment, a panel 650 can be attached to the one or more sides or ends of box 610 as shown in FIG. 6D. The panel 650 comprises a plurality of perforations through which liquid, as for example rain water, can pass through. The plurality of perforations have different shapes thereby they can be adapted to necessities of the portable rainwater box when in use. For example, a perforation could have a shape such that a pipe or tube can pass through. The panel 650 is attached by connection elements 40 and/or other attachment means.

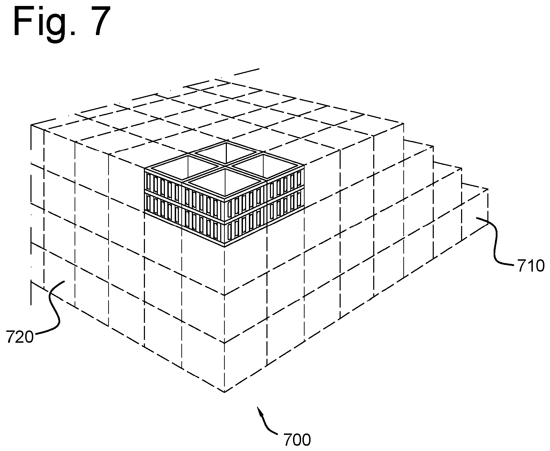

The panel 650 can be made of one or more materials. The material can be a polymer material, a wood material, a metal material or any other material, or combination of materials. Such panels 650 can be easily connected to form an outer side of an assembly (see FIG. 7), reducing material use in the inner parts, where full walls or panels are not needed.

FIG 7 shows a perspective view of a liquid storage system. Preferably, the liquid storage system is a water storage system. As shown in FIG.1, the foldable rainwater box 100, 610 provides a space in which water can be stored. A plurality of such foldable rainwater boxes are stacked on and next to each other on a subsurface, thus forming stacks 700, longitudinal rows 710 and transverse rows 720. By stacking a plurality of such foldable rainwater boxes, a reservoir with a considerable storage capacity, serving as a water storage, is obtained.

According to an aspect of the invention, a water storage system comprises at least an assembly of at least two foldable rainwater boxes 100, 610 as previously described, and a geosynthetic that blocks the passage of soil material, the geosynthetic enveloping the at least one panel or assembly, wherein the panel at least partially support the geosynthetic.

In order to be able to store the water in the water storage system having panels with openings in it, the openings can be covered with a geosynthetic to be able to keep the water at least temporarily inside the storage system and to keep out unwanted contamination. Geosynthetics are synthetic products usually used in civil engineering. They are generally polymeric products including eight main product categories: geotextiles, geogrids, geonets, geomembranes, geosynthetic clay liners, geofoams, geocells and geocomposites. Their polymeric nature makes them suitable for use in the ground where high levels of durability are required. They can also be used in exposed applications.

According to an aspect of the invention, the system is an underground liquid storage system. Preferably, the system is an underground water storage system. Such an underground water system is placed at a certain depth under ground level and is covered with at least a layer of soil at its top. The geosynthetic is then used both for keeping the water at least temporarily in the storage system, and for preventing soil or other contaminants to enter the system from the surroundings.

The geosynthetic may have a relatively high water permeability that allows the passage of water, such as a geotextile, and wherein the openings for the passage allow liquid to flow into and/or out of the system via the water permeable geosynthetic. Geosynthetics having a relatively high water permeability, such as geotextiles, allow the water to be gradually released from the storage system to the surrounding soil. The water is then allowed to return to underground water courses instead of to the sewerage, thereby preventing a dry-out of the surrounding soil.

Alternatively, the geosynthetic has a relatively low water permeability, for instance a geomembrane or a foil, such that water is kept within the system. In other cases, it is desired that the stored water is transported to the sewerage system or other disposal means instead of releasing it to the surrounding soil. In such cases, a geosynthetic with a relatively low water permeability is used to cover or enclose the panel or assembly.

Building an assembly from multiple foldable rainwater boxes 100, 610 includes placing a second foldable rainwater box 100, 610 on top of a first foldable rainwater box with side panels/sides and end panels/ends aligning, and feet/protrusions engaging the cavities/recesses beneath them. Side connection elements 40, 403 can connect on the sides for lateral connection and stability.

The assembly can also be built with foldable rainwater boxes next to each other, either in the X- or the Y-direction. In such a case, a first side/end (panel) and a second side/end (panel) are placed adjacent and connected to each other in a same plane, in a similar manner as shown in FIG 7.

Vertical and side connection features can ensure that the storage assembly is able to be quickly and easily formed with a plurality of the foldable boxes, while requiring few or no additional parts. Such side and/or top and bottom connection features ensure that the storage assembly stays strong and stable once in place. The integration of connection features into the upper frame or side panel reduces the time for building as additional parts do not need to be added during assembly. A box can simply be rotated from the folded state into a use state and connected to another box using the integrated connection features.

Additionally, because the foldable box 100 does not have a top plate, the assembly can be built such that a top plate is only used where structurally needed, for example, every few layers of boxes or even only on the top and bottom of the entire assembly. This is a very different configuration from past assemblies, which either stacked pillars onto or into a top plate, or stacked two top plates together to form a structure or assembly. Instead, the foldable boxes shown and described are able to form a strong and stable assembly or water storage structure without any top plates/decks. This results in savings of materials as well as time savings in having to connect fewer parts, and allows for the folding of the boxes themselves for easier transport and storage.

In summary, making a box of panels rotatably connected allows for a strong and stable box for water storage in use, while minimizing required space for storage and transport of the boxes when not in use. The ability to rotate the sides and ends (panels) with respect to each other to fold down into a compact package ensures that more boxes can be moved in less space to a location for use. Because all the panels are already rotatably connected together, unfolding them to a use state is also a quick and simple operation.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

## Claims

1. A foldable rainwater box (100,610) for liquid storage comprising:
- a first side (101,620) and second side (102,622) forming opposing sides of the box in a use state, and
- a first end (103,624) and a second end (104,626) forming opposing ends of the box in the use state,
- wherein adjacent sides and ends are rotatably connected to each other by one or more hinges (120,130,630), such that the sides and ends can rotate from a folded state to the use state, and
- wherein the folded state rotates the sides and ends with respect to each other such that the first side and the first end lay in a first plane and the second side and the second end lay in a second plane, wherein the first plane and the second plane are parallel,
- **characterized in that** the plurality of hinges comprises a first pair of hinges (630a) on opposing corners in the use state and a second pair of hinges (630b) on opposing corners in the use state, wherein the first pair of hinges permits different rotational movement than the second pair of hinges relative to an angle between adjacent sides and ends.

2. The foldable rainwater box of claim 1, wherein each of the sides (620,622) and ends (624,626) comprise an upper frame (612) and a lower frame (614) connected by one or more pillars (616); and wherein the one or more hinges are placed on the upper frame and lower frames of the adjacent sides and ends.

3. The foldable rainwater box of claim 2, wherein the upper frame (612) comprises one or more cavities (632) on an upper surface and the lower frame (614) comprises one or more feet (634) on a lower surface.

4. The foldable rainwater box of claim 3, wherein each of the one or more cavities and the one or more feet align with the one or more pillars.

5. The foldable rainwater box of any preceding claim, wherein the first pair of hinges permit a movement between 0 and 90 degrees relative to an angle between adjacent sides and ends, wherein at 0 degrees the adjacent sides and ends lay parallel to one another.

6. The foldable rainwater box of any preceding claim, wherein the second pair of hinges permit a movement between 90 and 180 degrees relative to an angle between adjacent sides and ends, wherein at 180 degrees the adjacent sides and end lay in line with each other.

7. The foldable rainwater box of any preceding claim, and further comprising one or more locking mechanisms to restrict foldability of the panels when in a use state.

8. The foldable rainwater box of claim 7, wherein the locking mechanism comprises one or more of: a protrusion (404), a recess (405), an extension of a hinge, and complementary interlocking parts.

9. The foldable rainwater box of any preceding claim, wherein each side and end comprises at least one side connection element (403).

10. The foldable rainwater box of claim 9, wherein the at least one connection element comprises a protruding portion (403a) and a receiving portion (403b) which are complementary in shape.

11. The foldable rainwater box of any preceding claim, wherein each side and end comprises a panel.

12. A method of manufacturing the foldable rainwater box (100) of any of the preceding claims, the method comprising:
- forming each side and end with a portion of a first rotatable hinge (120) on a first side part of the respective side or end, and forming a portion of a second rotatable hinge (130) on a second side part opposite to the first side part of the respective side or the end, the portion of the first rotatable hinge (120) shaped complementary to the portion of the second rotatable hinge (130).

13. The method of claim 12, wherein the step of forming each side and end comprises forming the respective side or the end, with an upper frame (612), a lower frame (614) and at least one pillar (616) extending between the upper frame and the lower frame, wherein each of the upper frame and lower frame of each respective side and end has the portion of the first rotatable hinge (120) and the portion of the second rotatable hinge (130).

14. The method of any of claims 12-13, the method comprising:
- connecting the sides and ends into a box shape, with portions of the first hinge (120) on one side connecting to portions of the second hinge (130) on an adjacent side such that the box can rotate between a use state forming the box shape and a folded state.

## Patentansprüche

1. Faltbare Regenwasserbox (100,610) zur Flüssigkeitsaufbewahrung, umfassend:
- eine erste Seite (101,620) und eine zweite Seite (102,622), die im Gebrauchszustand gegenüberliegende Seiten der Box bilden, und
- ein erstes Ende (103, 624) und ein zweites Ende (104, 626), die im Gebrauchszustand gegenüberliegende Enden der Box bilden,
- wobei benachbarte Seiten und Enden durch ein oder mehrere Scharniere (120, 130, 630) drehbar miteinander verbunden sind, so dass die Seiten und Enden aus einem gefalteten Zustand in den Gebrauchszustand gedreht werden können, und
- wobei der gefaltete Zustand die Seiten und Enden relativ zueinander so dreht, dass die erste Seite und das erste Ende in einer ersten Ebene liegen und die zweite Seite und das zweite Ende in einer zweiten Ebene liegen, wobei die erste Ebene und die zweite Ebene parallel sind,
- **dadurch gekennzeichnet, dass** die mehreren Scharniere ein erstes Paar Scharniere (630a) an gegenüberliegenden Ecken im Gebrauchsstatus und ein zweites Paar Scharniere (630b) an gegenüberliegenden Ecken im Gebrauchsstatus umfassen, wobei das erste Paar Scharniere eine andere Drehbewegung als das zweite Paar Scharniere relativ zu einem Winkel zwischen benachbarten Seiten und Enden zulässt.

2. Faltbare Regenwasserbox nach Anspruch 1, wobei jede der Seiten (620, 622) und Enden (624, 626) einen oberen Rahmen (612) und einen unteren Rahmen (614) umfasst, die durch eine oder mehrere Säulen (616) verbunden sind; und wobei die eine oder mehreren Scharniere an den oberen Rahmen und unteren Rahmen der benachbarten Seiten und Enden angebracht sind.

3. Faltbare Regenwasserbox nach Anspruch 2, wobei der obere Rahmen (612) einen oder mehrere Hohlräume (632) an einer Oberseite und der untere Rahmen (614) einen oder mehrere Füße (634) an einer Unterseite aufweist.

4. Faltbare Regenwasserbox nach Anspruch 3, wobei jeder der einen oder mehreren Hohlräume und die einen oder mehreren Füße mit den einen oder mehreren Säulen fluchten.

5. Faltbare Regenwasserbox nach einem der vorstehenden Ansprüche, wobei das erste Paar Scharniere eine Bewegung zwischen 0 und 90 Grad relativ zu einem Winkel zwischen benachbarten Seiten und Enden ermöglicht, wobei bei 0 Grad die benachbarten Seiten und Enden parallel zueinander liegen.

6. Faltbare Regenwasserbox nach einem der vorstehenden Ansprüche, wobei das zweite Paar Scharniere eine Bewegung zwischen 90 und 180 Grad relativ zu einem Winkel zwischen benachbarten Seiten und Enden ermöglicht, wobei bei 180 Grad die benachbarten Seiten und Enden in einer Linie zueinander liegen.

7. Faltbare Regenwasserbox nach einem der vorstehenden Ansprüche, die ferner einen oder mehrere Verriegelungsmechanismen umfasst, um die Faltbarkeit der Platten im Gebrauchszustand zu begrenzen.

8. Faltbare Regenwasserbox nach Anspruch 7, wobei der Verriegelungsmechanismus eines oder mehreres umfasst von: einem Vorsprung (404), einer Aussparung (405), einer Verlängerung eines Scharniers und komplementären Verriegelungsteilen.

9. Faltbare Regenwasserbox nach einem der vorstehenden Ansprüche, wobei jede Seite und jedes Ende mindestens ein Seitenverbindungselement (403) umfasst.

10. Faltbare Regenwasserbox nach Anspruch 9, wobei das mindestens eine Verbindungselement einen vorstehenden Abschnitt (403a) und einen Aufnahmeabschnitt (403b) umfasst, die komplementär geformt sind.

11. Faltbare Regenwasserbox nach einem der vorstehenden Ansprüche, wobei jede Seite und jedes Ende eine Platte umfasst.

12. Verfahren zur Herstellung der faltbaren Regenwasserbox (100) nach einem der vorstehenden Ansprüche, wobei das Verfahren umfasst:
- Ausbilden jeder Seite und jedes Endes mit einem Abschnitt eines ersten drehbaren Scharniers (120) an einem ersten Seitenteil der jeweiligen Seite oder des jeweiligen Endes und Ausbilden eines Abschnitts eines zweiten drehbaren Scharniers (130) an einem zweiten Seitenteil gegenüber dem ersten Seitenteil der jeweiligen Seite oder des jeweiligen Endes, wobei der Abschnitt des ersten drehbaren Scharniers (120) komplementär zu dem Abschnitt des zweiten drehbaren Scharniers (130) geformt ist.

13. Verfahren nach Anspruch 12, wobei der Schritt des Bildens jeder Seite und jedes Endes das Bilden der jeweiligen Seite oder des jeweiligen Endes mit einem oberen Rahmen (612), einem unteren Rahmen (614) und mindestens einer Säule (616), die sich zwischen dem oberen Rahmen und dem unteren Rahmen erstreckt, umfasst, wobei jeder von dem oberen Rahmen und dem unteren Rahmen jeder jeweiligen Seite und jedes Endes den Abschnitt des ersten drehbaren Scharniers (120) und den Abschnitt des zweiten drehbaren Scharniers (130) aufweist.

14. Verfahren nach einem der Ansprüche 12 bis 13, wobei das Verfahren umfasst:
- Verbinden der Seiten und Enden zu einer Kastenform, wobei Abschnitte des ersten Scharniers (120) auf einer Seite mit Abschnitten des zweiten Scharniers (130) auf einer benachbarten Seite verbunden sind, so dass sich die Box zwischen einem Gebrauchszustand, in dem sie die Kastenform bildet, und einem zusammengeklappten Zustand drehen kann.

## Revendications

1. Boîte à eau de pluie pliable (100, 610) destinée au stockage de liquides, comprenant :
- un premier côté (101, 620) et un deuxième côté (102,622) formant des côtés opposés de la boîte dans un état d'utilisation, et
- une première extrémité (103, 624) et une deuxième extrémité (104, 626) formant des extrémités opposées de la boîte dans l'état d'utilisation,
- où les côtés et les extrémités adjacents sont reliés entre eux de manière pivotante par une ou plusieurs charnières (120, 130, 630), de telle sorte que les côtés et les extrémités peuvent pivoter d'un état plié à l'état d'utilisation, et
- où l'état plié fait pivoter les côtés et les extrémités les uns par rapport aux autres de telle sorte que le premier côté et la première extrémité se trouvent dans un premier plan et que le deuxième côté et la deuxième extrémité se trouvent dans un deuxième plan, le premier plan et le deuxième plan sont parallèles,
- **caractérisée en ce que** la pluralité de charnières comprend une première paire de charnières (630a) sur des coins opposés dans l'état d'utilisation et une deuxième paire de charnières (630b) sur des coins opposés dans l'état d'utilisation, où la première paire de charnières permet un mouvement de rotation différent de celui de la deuxième paire de charnières par rapport à un angle entre les côtés et les extrémités adjacents.

2. Boîte à eau de pluie pliable selon la revendication 1, où chacun des côtés (620, 622) et des extrémités (624, 626) comprend un cadre supérieur (612) et un cadre inférieur (614) reliés par un ou plusieurs montants (616) ; et où l'une ou plusieurs charnières sont placées sur le cadre supérieur et les cadres inférieur des côtés et extrémités adjacents.

3. Boîte à eau de pluie pliable selon la revendication 2, où le cadre supérieur (612) comprend une ou plusieurs cavités (632) sur une surface supérieure et le cadre inférieur (614) comprend un ou plusieurs pieds (634) sur une surface inférieure.

4. Boîte à eau de pluie pliable selon la revendication 3, où chacune de l'une ou plusieurs cavités et chacun de l'un ou plusieurs pieds s'alignent avec l'un ou plusieurs montants.

5. Boîte à eau de pluie pliable selon l'une quelconque des revendications précédentes, où la première paire de charnières permet un mouvement compris entre 0 et 90 degrés par rapport à un angle entre des côtés et des extrémités adjacents, où à 0 degré, les côtés et les extrémités adjacents sont parallèles les uns aux autres.

6. Boîte à eau de pluie pliable selon l'une quelconque des revendications précédentes, où la deuxième paire de charnières permet un mouvement compris entre 90 et 180 degrés par rapport à un angle entre des côtés et les extrémités adjacents, où à 180 degrés, les côtés et les extrémités adjacents sont alignés les uns avec les autres.

7. Boîte à eau de pluie pliable selon l'une quelconque des revendications précédentes, et comprenant en outre un ou plusieurs mécanismes de verrouillage pour limiter la pliabilité des panneaux lorsqu'ils sont dans un état d'utilisation.

8. Boîte à eau de pluie pliable selon la revendication 7, où le mécanisme de verrouillage comprend un ou plusieurs des éléments suivants : une saillie (404), un évidement (405), une extension d'une charnière et des pièces emboîtables complémentaires.

9. Boîte à eau de pluie pliable selon l'une quelconque des revendications précédentes, où chaque côté et chaque extrémité comprend au moins un élément de connexion latéral (403).

10. Boîte à eau de pluie pliable selon la revendication 9, où l'au moins un élément de connexion comprend une partie saillante (403a) et une partie de réception (403b) qui sont complémentaires dans la forme.

11. Boîte à eau de pluie pliable selon l'une quelconque des revendications précédentes, où chaque côté et chaque extrémité comprennent un panneau.

12. Procédé de fabrication de la boîte à eau de pluie pliable (100) selon l'une quelconque des revendications précédentes, le procédé comprenant :
- former chaque côté et chaque extrémité avec une partie d'une première charnière rotative (120) sur une première partie latérale du côté ou de l'extrémité respectif, et former une partie d'une deuxième charnière rotative (130) sur une deuxième partie latérale opposée à la première partie latérale du côté ou de l'extrémité respectif, la partie de la première charnière rotative (120) étant de forme complémentaire à la partie de la deuxième charnière rotative (130).

13. Procédé selon la revendication 12, où l'étape consistant à former chaque côté et chaque extrémité comprend la formation du côté ou de l'extrémité respectif, avec un cadre supérieur (612), un cadre inférieur (614) et au moins un montant (616) s'étendant entre le cadre supérieur et le cadre inférieur, où chacun du cadre supérieur et du cadre inférieur de chaque côté et extrémité respectifs comporte la partie de la première charnière rotative (120) et la partie de la deuxième charnière rotative (130).

14. Procédé selon l'une quelconque des revendications 12 à 13, le procédé comprenant :
- relier les côtés et les extrémités en une forme de boîte, avec les parties de la première charnière (120) d'un côté se connectant aux parties de la deuxième charnière (130) d'un côté adjacent de telle sorte que la boîte puisse pivoter entre un état d'utilisation formant la forme de boîte et un état plié.
